# EUROPÄISCHE PATENTANMELDUNG

(11) **EP 0 654 919 A2**
(43) Veröffentlichungstag der Anmeldung: **24.05.1995**
(21) Anmeldenummer: 94117954.1
(22) Anmeldetag: 14.11.1994
(51) Int. Cl.: H04L 9/32, G07F 7/10

(54) **Verfahren zur Authentifizierung eines Systemteils durch ein anderes Systemteil eines Informationsübertragungssystems nach dem Challenge-and-Response-Prinzip**

(30) Priorität: 19.11.1993 DE 4339460
(71) Anmelder: SIEMENS AKTIENGESELLSCHAFT, D-80333 München (DE)
(72) Erfinder: Schrenk, Hartmut, Dr., D-85540 Haar (DE)

(57) **Zusammenfassung**

Bei einem mit einem Endgerät und einer tragbaren Datenträgeranordnung gebildeten Informationsübertragungssystem findet eine Authentifizierung eines Systemteils durch ein anderes Systemteil nach dem Challenge-and-Response-Prinzip statt. Die tragbare Datenträgeranordnung ist mit einem Wertespeicher und einer dieser zugeordneten Kontrolleinrichtung sowie einem nichtflüchtigen, begrenzbaren Fehlerzähler gebildet. Bei dem Authentifizierungsverfahren ist zunächst in der tragbaren Datenträgeranordnung eine Sperre für das Durchführen von Rechenoperationen eingerichtet, die erst durch Verändern des Fehlerzählerstandes aufgehoben werden muß. Von dem Endgerät werden Zufallsdaten als Challenge-Daten zur tragbaren Datenträgeranordnung übertragen, nachdem der Fehlerzählerstand inkremental verändert wurde und die Sperre aufgehoben worden ist. Sowohl im Endgerät als auch in der tragbaren Datenträgeranordnung werden aus den Challenge-Daten mit Hilfe zumindest eines Algorithmus und geheimer Schlüsseldaten jeweils Authentifikationsparameter AP3, AP4 berechnet. Das Endgerät überträgt seine Authentifikationsparameter AP3 als Response zur tragbaren Datenträgeranordnung wo sie mit den dort berechneten Authentifikationsparametern AP4 verglichen werden. Bei Übereinstimmung der jeweiligen Authentifikationsparameter AP3, AP4 wird der Wertespeicher wiederaufladbar und/oder der Fehlerzähler rücksetzbar.

## Beschreibung

Die Erfindung betrifft ein Verfahren zur Authentifizierung eines Systemteils durch ein anderes Systemteil nach dem Challenge-and-Response-Prinzip bei einem mit einem Endgerät und einer tragbaren Datenträgeranordnung gebildeten Informationsübertragungssystem, wobei die tragbare Datenträgereinheit mit einem Wertespeicher und einer diesem zugeordneten Kontrolleinrichtung gebildet ist.

Tragbare Datenträgeranordnungen wie beispielsweise Telefonkarten sind mit einem Wertespeicher und einer diesem zugeordneten Kontrolleinrichtung gebildet. Der Wertespeicher ist als nichtflüchtiger Speicher, also beispielsweise als EPROM oder EEPROM, ausgeführt. Da solche Datenträgeranordnungen einen Geldwert repräsentieren, ist das Risiko gegeben, daß Versuche unternommen werden, den Wertespeicher zu manipulieren bzw. solche Datenträgeranordnungen beispielsweise mittels eines Mikroprozessors zu simulieren. Zu diesem Zweck könnte der Datenverkehr zwischen einer solchen tragbaren Datenträgeranordnung und einem Endgerät abgehört werden und dann anhand des ermittelten Datenflusses die Datenträgeranordnung simuliert werden.

Um eine Simulation zu verhindern, sind Verfahren entwickelt worden, die nach dem sogenannten Challenge-and-Response-Prinzip arbeiten. Hierbei wird vom Endgerät eine Challenge beispielsweise eine Zufallszahl zu der tragbaren Datenträgeranordnung übermittelt. Anschließend werden sowohl in der tragbaren Datenträgeranordnung als auch im Endgerät diese Zufallszahl mit einem geheimen Schlüssel mittels eines Algorithmus verschlüsselt. Daraufhin sendet die tragbare Datenträgereinheit die verschlüsselte Zufallszahl an das Endgerät als Response zurück. Im Endgerät wird diese Response mit der im Endgerät verschlüsselten Zufallszahl verglichen. Bei Übereinstimmung wird die tragbare Datenträgeranordnung als echt erkannt und ein Datenaustausch kann stattfinden. Wenn keine Übereinstimmung gegeben ist, findet kein Datenaustausch statt, so daß die tragbare Datenträgeranordnung nicht simuliert werden kann.

Bekannte Verschlüsselungsalgorithmen sind nur dann ausreichend sicher, wenn die Rechenleistung in der tragbaren Datenträgeranordnung und die Wortlänge der verschlüsselten Daten ausreichend groß sind. Fur Telefonkarten sind die bekannten Algorithmen wie beispielsweise der RSA-Algorithmus viel zu aufwendig und damit zu teuer.

Bei einer Telefonkarte werden bei jedem Gespräch eine bestimmte Anzahl der im Wertespeicher gespeicherten Werte gelöscht. Wenn alle Werte gelöscht sind, wird die Karte normalerweise weggeworfen. Es besteht somit das Bedürfnis, den Wertespeicher wieder aufladbar zu gestalten.

Es gibt heute Telefonkreditkarten, die einen weiteren Wertespeicher enthalten, in dem ein bestimmter Kredit abgespeichert ist. Ist nun der Wertespeicher entwertet, so kann er wieder aufgeladen werden, wenn gleichzeitig ein entsprechender Teil des Kredits im weiteren Wertespeicher gelöscht wird. Dieser Wiederaufladevorgang des Wertespeichers findet jedoch innerhalb der Karte statt.

Soll jedoch der Wiederaufladevorgang von außen gesteuert werden, so müssen entsprechende Maßnahmen getroffen werden, um eine mißbräuchliche Wiederaufladung sicher unterbinden zu können.

Die Aufgabe der vorliegenden Erfindung ist es somit, ein sicheres Verfahren zur Authentifizierung eines Systemteils durch ein anderes Systemteil nach dem Challenge-and-Response-Prinzip bei einem mit einem Endgerät und einer tragbaren Datenträgeranordnung gebildeten Informationsübertragungssystem, wobei die tragbare Datenträgereinheit mit einem Wertespeicher und einer dieser zugeordneten Kontrolleinheit gebildet ist, anzugeben, das mit geringem Aufwand durchführbar ist.

Die Aufgabe wird gelöst durch ein Verfahren gemäß dem Anspruch 1. Vorteilhafte Weiterbildungen der Erfindung sind in den Unteransprüchen angegeben.

In erfindungsgemäßer Weise ist die tragbare Datenträgeranordnung außer mit einem Wertespeicher und einer diesem zugeordneten Kontrolleinrichtung auch mit einem begrenzbaren Fehlerzähler gebildet, dessen Zählerstand schreib- und löschbar nichtflüchtig in EEPROM-Speicherzellen abgelegt ist.

Vor jedem Authentifizierungsvorgang wird der Fehlerzählerstand inkremental durch einen Programmiervorgang verändert, wobei es durch die Begrenzung der Anzahl der Authentifizierungsvorgänge nicht möglich ist, den Algorithmus oder den geheimen Schlüssel, mit denen die Authentifikationsparameter aus den Challenge-Daten berechnet werden, zu ermitteln. Außerdem wird vor jedem Authentifizierungsvorgang eine Sperre in der tragbaren Datenträgeranordnung eingerichtet, die nur durch eine Veränderung des Fehlerzählerstands aufgehoben werden kann. Auf diese Weise wird sichergestellt, daß jeder Authentifizierungsvorgang gezählt wird. Die Sperre kann beispielsweise ein logischer Zustand in einer bestimmten Speicherzelle sein.

Ein Wiederaufladen des Wertespeicher in der tragbaren Datenträgeranordnung ist auf erfindungsgemäße Weise nur möglich, wenn sich das Endgerät durch denselben geheimen Schlüssel und denselben Algorithmus mit denen die Authentifikationsparameter aus den Challenge-Daten berechnet worden sind, authentifiziert hat.

Es ist vorteilhaft, wenn bei der Berechnung der Authentifikationsparameter neben den Challenge-Daten und dem geheimen Schlüssel weitere Daten einbezogen werden. Die Abhängigkeit der Response auch vom Stand des Fehlerzählers, vom jeweiligen Inhalt des wieder aufzuladenden Speichers oder von Identifikationsdaten des tragbaren Datenträgers erschwert die mißbräuchliche Analyse des gesamten Wiederaufladevorgangs zusätzlich.

In vorteilhafter Weiterbildung der Erfindung wird vor oder mit dem Wiederaufladen des Wertespeichers der Fehlerzähler rückgesetzt.

Eine höhere Sicherheit wird erreicht, wenn im Falle, daß der Fehlerzähler vor dem Wiederaufladen des Wertespeichers rückgesetzt wurde, aus den Challenge-Daten mittels eines zweiten Algorithmus, weiterer geheimer Schlüsseldaten und/oder weiterer sonstiger Daten des tragbaren Datenträgers weitere Authentifikationsparameter ermittelt und miteinander verglichen werden.

In weiterer Ausbildung der Erfindung kann auch vorgesehen werden, daß sich vor einer Authentifizierung des Endgeräts gegenüber der tragbaren Datenträgeranordnung, diese sich gegenüber dem Endgerät mittels desselben Vorgangs authentifizieren muß. Zu diesem Zweck überträgt die tragbare Datenträgeranordnung die ermittelten Authentifikationsparameter als Response zu dem Endgerät, wo sie dann mit den dort ermittelten Authentifikationsparameter verglichen werden. Erst nach Übereinstimmung der jeweiligen Authentifikationsparameter wird die Authentifizierung des Endgeräts bezüglich der Berechtigung für das Rücksetzen des Fehlerzählers und/oder des Wiederaufladens des Wertespeichers durchgeführt. Falls sich die tragbare Datenträgeranordnung nicht authentifizieren kann, wird der Vorgang sofort abgebrochen.

Es ist hinsichtlich der Sicherheit des Authentifizierungsvorgangs vorteilhaft, wenn mit jedem einzelnen Authentifizierungsvorgang neue Challenge-Daten von dem Endgerät zur tragbaren Datenträgeranordnung übermittelt werden. Eine weitere Erhöhung der Sicherheit wird erreicht, wenn bei jedem Authentifizierungsvorgang ein neuer geheimer Schlüssel und/oder ein neuer Algorithmus verwendet werden.

Damit im Endgerät nicht eine Vielzahl von geheimen Schlüsseln abgespeichert sein müssen, werden die in der jeweiligen tragbaren Datenträgeranordnung gespeicherten geheimen Schlüsseldaten verschlüsselt als Identifikationsdaten vom Endgerät aus der tragbaren Datenträgeranordnung gelesen und im Endgerät mittels eines weiteren geheimen Schlüssel entschlüsselt, so daß dann sowohl in der jeweiligen tragbaren Datenträgeranordnung als auch im Endgerät derselbe geheime Schlüssel vorliegt.

Die Erfindung wird nachfolgend anhand eines Ausführungsbeispiels mittels einer Figur näher erläutert. Es zeigt dabei die

Figur ein Ablaufdiagramm eines erfindungsgemäßen Verfahrens.

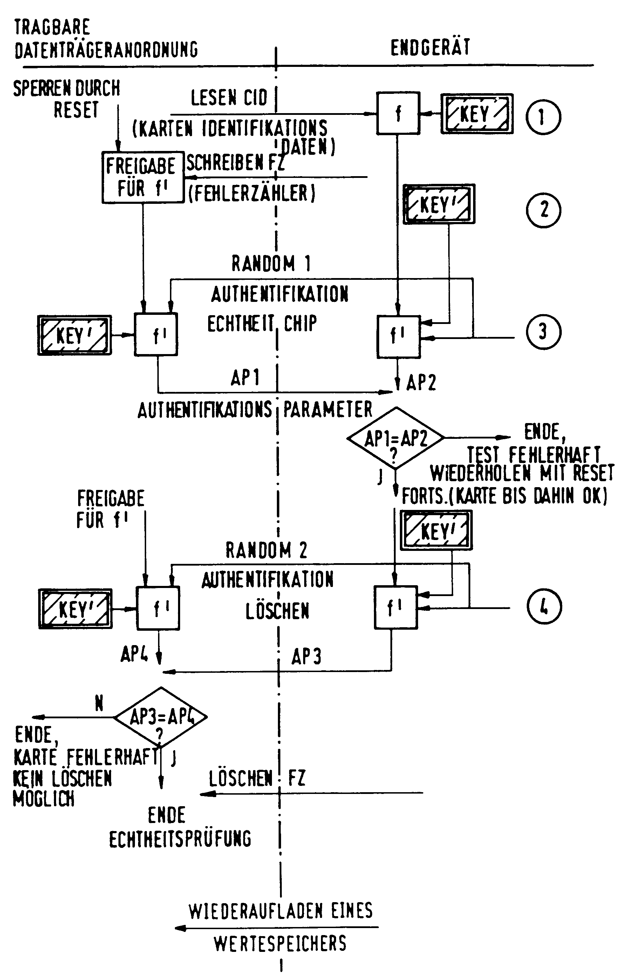

Der Ablauf in der tragbaren Datenträgeranordnung ist in der linken Hälfte und der Ablauf im Endgerät in der rechten Hälfte der Figur dargestellt. In einem ersten Schritt werden einerseits die Sperre eingerichtet, was beispielsweise durch ein Reset-Signal für den in der tragbaren Datenträgeranordnung enthaltenen Halbleiterchip erfolgen kann, und andererseits werden die Kartenidentifikationsdaten CID vom Endgerät aus der tragbaren Datenträgeranordnung gelesen. Diese werden dann mittels eines weiteren geheimen Schlüssels KEY und eines dazugehörenden Algorithmus f zu einem geheimen Schlüssel KEY' entschlüsselt. Dieser geheime Schlüssel KEY', ist auch in der tragbaren Datenträgeranordnung enthalten.

In einem zweiten Schritt wird der Fehlerzähler FZ in der tragbaren Datenträgeranordnung inkremental erhöht oder erniedrigt. Durch die Anzahl der möglichen Zählschritte ist die maximale Anzahl der Authentifikationsvorgänge beschränkt, so daß das Ermitteln des geheimen Schlüssels KEY' durch viele Versuche nicht möglich ist. Durch das Verändern des Fehlerzählerstands wird die Sperre aufgehoben, so daß in der tragbaren Datenträgeranordnung die Durchführung von Operationen möglich wird.

In einem dritten Schritt wird zunächst eine erste Zufallszahl RANDOM 1 als Challenge vom Endgerät zur tragbaren Datenträgeranordnung übermittelt. Dann werden in der tragbaren Datenträgeranordnung diese Challenge mittels des geheimen Schlüssels KEY', und eines Algorithmus f', zu Authentifikationsparametern AP1 verarbeitet, und als Response-Daten zum Endgerät übermittelt. Dort werden sie mit ebenfalls aus der Zufallszahl RANDOM 1, dem geheimen Schlüssel KEY' und dem Algorithmus f' ermittelten Authentifikationsparametern AP2 verglichen. Bei Übereinstirnung wird die tragbare Datenträgeranordnung als gültig erkannt und der Authentifikationsvorgang wird fortgesetzt. Ist keine Übereinstimmung gegeben, so muß der Vorgang von vorne begonnen werden, soweit der Fehlerzahler FZ dies zuläßt.

Bei Überstimmung wird in einem vierten Schritt eine weitere Zufallszahl RANDOM 2 als weitere Challenge vom Endgerät an die tragbare Datenträgeranordnung übermittelt. Diese wird wiederum mittels des geheimen Schlüssels KEY' und des Algorithmus f', sowohl in der tragbaren Datenträgeranordnung zu Authentifikationsparametern AP4 als auch im Endgerät zu Authentifikationsparametern AP3 verarbeitet. Die Authentifikationsparameter AP3 des Endgeräts werden dann als Response zur tragbaren Datenträgeranordnung übermittelt, wo sie mit den dortigen Authentifikationsparametern AP4 verglichen werden. Bei Übereinstimmung hat sich das Endgerät gegenüber der tragbaren Datenträgeranordnung als berechtigt authentifiziert, sowohl den Fehlerzähler FZ rücksetzen zu dürfen als auch den Wertespeicher wieder aufladen zu dürfen.

Es wäre auch möglich und wurde zu noch größerer Sicherheit fuhren, wenn vor dem Wiederaufladen des Wertespeichers ein weiterer Authentifizierungsvorgang mit einem weiteren Algorithmus stattfinden wurde. Es könnte dazu auch eine andere Zufallszahl erzeugt und als Challenge zur tragbaren Datenträgeranordnung übermittelt werden.

Durch das erfindungsgemäße Verfahren ist ein hohes Maß an Sicherheit bezüglich des Schutzes vor Manipulation gegeben, da sich sowohl die tragbare Datenträgeranordnung als auch das Endgerät jeweils gegenüber dem anderen Systemteil authentifizieren müssen und ein Ermitteln der verwendeten Algorithmen und geheimen Schlüssel durch mehrfaches Probieren nicht möglich ist, da einerseits nur eine durch den Fehlerzähler FZ begrenzte Anzahl von Versuchen erlaubt ist, und andererseits innerhalb dieser Anzahl von Versuchen ein Rückrechnen mittels der Challenge- und der Response-Daten nicht möglich ist.

## Patentansprüche

1. Verfahren zur Authentifizierung eines Systemteils durch ein anderes Systemteil nach dem Challenge-and-Response-Prinzip bei einem mit einem Endgerät und einer tragbaren Datenträgeranordnung gebildeten Informationsübertragungssystem, wobei die tragbare Datenträgeranordnung mit einem Wertespeicher und einer diesem zugeordneten Kontrolleinrichtung, einem begrenzbaren, nichtflüchtigen Fehlerzähler (FZ) sowie einer Sperrvorrichtung gebildet ist, mit folgenden Schritten:
- in der tragbaren Datenträgeranordnung wird eine Sperre für das Durchführen von Rechenoperationen eingerichtet, die nur durch Verändern des Fehlerzählerstandes aufgehoben werden kann,
- der Fehlerzählerstand wird durch einen Programmiervorgang verändert, wodurch die Sperre aufgehoben wird,
- von dem Endgerät werden Zufallsdaten (RANDOM 1; RANDOM 2) als Challenge zur tragbaren Datenträgeranordnung übertragen,
- sowohl im Endgerät als auch in der tragbaren Datenträgeranordnung werden aus der Challenge (RANDOM 1; RANDOM 2) mit Hilfe zumindest eines ersten Algorithmus (f') sowie geheimer Schlüsseldaten (KEY') jeweils Authentifikationsparameter (AP3, AP4) berechnet
- das Endgerät überträgt seine Authentifikationsparameter (AP3) als Response zur tragbaren Datenträgeranordnung, wo sie mit den dort berechneten Authentifikationsparametern (AP4) verglichen werden,
- bei Übereinstimmung der jeweiligen Authentifikationsparameter (AP3, AP4) wird die Sperrvorrichtung deaktiviert, so daß der Wertespeicher von dem Endgerät wieder aufladbar ist.

2. Verfahren nach Anspruch 1, **dadurch gekennzeichnet**,
daß der Wertespeichers von dem Endgerät wiederaufgeladen wird.

3. Verfahren nach Anspruch 1, **dadurch gekennzeichnet**,
daß gleichzeitig mit dem Wiederaufladen des Wertespeichers der Fehlerzähler (FZ) rückgesetzt wird.

4. Verfahren nach Anspruch 1, **dadurch gekennzeichnet**,
daß vor dem Wiederaufladen des Wertespeichers der Fehlerzähler (FZ) rückgesetzt wird.

5. Verfahren nach Anspruch 3, **dadurch gekennzeichnet**,
- daß nach dem Rücksetzen des Fehlerzählers (FZ) sowohl im Endgerät als auch in der tragbaren Datenträgeranordnung aus der Challenge (RANDOM 1; RANDOM 2) mit Hilfe zumindest eines zweiten Algorithmus sowie der geheimen Schlüsseldaten (KEY') jeweils weitere Authentifikationsparameter berechnet werden,
- daß das Endgerät seine weiteren Authentifikationsparameter als Response zur tragbaren Datenträgeranordnung überträgt, wo sie mit den dort berechneten weiteren Authentifikationsparametern verglichen werden, und
- daß erst bei Übereinstimmung der jeweiligen weiteren Authentifikationsparameter der Wertespeicher von dem Endgerät wieder aufgeladen wird.

6. Verfahren nach einem der vorhergehenden Ansprüche, **dadurch gekennzeichnet**,
daß gleichzeitig mit dem Wiederaufladen des Wertespeichers ein weiterer Wertespeicher entsprechend dem vorherigen Wertestand des Wertespeichers umgeladen wird.

7. Verfahren nach einem der vorhergehenden Ansprüche, **dadurch gekennzeichnet**,
- daß vor der Übertragung der Authentifikationsparameter (AP3) des Endgeräts zur tragbaren Datenträgeranordnung die tragbare Datenträgeranordnung ihre Authentifikationsparameter (AP1) als Response zum Endgerät überträgt, wo sie mit den dort berechneten Authentifikationsparametern (AP2) verglichen werden, und
- daß erst nach einem positiven Vergleichsergebnis weitere Operationen möglich sind.

8. Verfahren nach einem der vorhergehenden Ansprüche, **dadurch gekennzeichnet**,
daß vor jeder Berechnung von Authentifikationsparametern (AP1, AP2, AP3, AP4) neue Zufallsdaten (RANDOM 1; RANDOM 2) als jeweils neue Challenge vom Endgerät zur tragbaren Datenträgeranordnung übertragen werden.

9. Verfahren nach einem der vorhergehenden Ansprüche, **dadurch gekennzeichnet**,
daß für jeden Authentifikationsvorgang neue geheime Schlüsseldaten verwendet werden.

10. Verfahren nach einem der vorhergehenden Ansprüche, **dadurch gekennzeichnet**,
daß für jeden Authentifikationsvorgang ein neuer Algorithmus verwendet wird.

11. Verfahren nach einem der vorhergehenden Ansprüche, **dadurch gekennzeichnet**,
daß das Endgerät Identifikationsdaten (CID) aus der tragbaren Datenträgeranordnung liest und daraus den oder die geheimen Schlüssel (KEY') berechnet, der oder die auch in der tragbaren Datenträgeranordnung zur Verfügung steht oder stehen.
